# FASCICULE DE BREVET EUROPEEN

(11) **EP 3 294 971 B1**
(45) Date de publication et mention de la délivrance du brevet: **21.08.2019**
(21) Numéro de dépôt: 16729012.1
(22) Date de dépôt: 10.05.2016
(51) Int. Cl.: E04H 4/16

(54) **APPAREIL NETTOYEUR DE PISCINE À DISPOSITIF DE FILTRATION EXTRACTIBLE DEPUIS UNE FACE LATÉRALE**
POOLREINIGER MIT EINER ÜBER EINE SEITENFLÄCHE EXTRAHIERBARE FILTERVORRICHTUNG
POOL CLEANING APPARATUS WITH A FILTRATION DEVICE THAT CAN BE EXTRACTED VIA A LATERAL FACE

(30) Priorité: 12.05.2015 FR 1554277
(43) Date de publication de la demande: 21.03.2018
(73) Titulaire: Zodiac Pool Care Europe, 69500 Bron (FR)
(72) Inventeur: FAVIE, Louis, 31470 Colomiers (FR); BLANC TAILLEUR, Philippe, 31400 Toulouse (FR); PICHON, Philippe, 31800 Villeneuve de Rivière (FR)
(74) Mandataire: Ipside
(86) Numéro de dépôt international: PCT/FR2016/051096
(87) Numéro de publication internationale: WO 2016/181065

(56) Documents cités:
- FR-A1- 2 925 550
- FR-A1- 2 925 558
- FR-A1- 2 990 975
- GB-A- 1 565 607

## Description

La présente invention relève du domaine des équipements pour piscine. Elle concerne plus particulièrement un appareil de nettoyage de piscine dont le filtre à débris est extractible à partir d'une face latérale du corps de l'appareil.

### ÉTAT DE LA TECHNIQUE

L'invention concerne un appareil nettoyeur de surface immergée dans un liquide, telle qu'une surface formée par le fond et les parois latérales d'un bassin, notamment d'une piscine. Plus spécifiquement, l'invention fait référence à un robot mobile de nettoyage de piscine. Un tel robot réalise le nettoyage de la piscine en parcourant et brossant la surface de ladite piscine, et en aspirant les débris éventuels vers un filtre adapté à collecter lesdits débris. On entend par débris toutes les particules présentes au sein du bassin, et ayant une mesure de surface ou de volume comprise dans un certain intervalle dont les bornes inférieure et supérieure sont fonction des caractéristiques technique du robot, de sorte que, d'une part, la borne supérieure autorise l'entrée desdites particules dans le dispositif de filtration, et d'autre part, la borne inférieure empêche la sortie desdites particules du dispositif de filtration. Il s'agit, par exemple, de morceaux de feuilles, microalgues, etc., ces débris étant normalement déposés au fond du bassin ou collés sur les parois latérales de celui-ci.

Le plus couramment, le robot est alimenté en énergie par un câble électrique reliant ledit robot à une unité extérieure de commande et d'alimentation.

Actuellement, il existe différents appareils nettoyeurs de surface immergée, notamment à dispositif de filtrage démontable et extractible. Ainsi, il est connu, notamment, des demandes de brevets EP 2 235 293 et EP 2 235 296 de la demanderesse décrivant des appareils comprenant classiquement un corps, des organes d'entraînement dudit corps sur la surface immergée, une chambre de filtration ménagée au sein du corps et comportant une entrée de liquide, une sortie de liquide, un circuit hydraulique de circulation de liquide entre l'entrée et la sortie à travers un dispositif de filtrage. En outre, dans les appareils de nettoyage décrits dans ces documents, le dispositif de filtrage est amovible et extractible du corps de l'appareil au moyen d'une trappe aménagée sur une paroi supérieure du corps desdits appareils, de sorte que les feuilles et autres débris peuvent être vidés sans devoir retourner l'appareil de nettoyage.

Ces appareils disposent de programmes automatiques de nettoyage du fond du bassin et éventuellement des parois latérales de celui-ci. Un tel programme détermine un nettoyage de la piscine en un temps prédéterminé. Généralement, le robot est retiré de l'eau par l'utilisateur à la fin du cycle ou à intervalles réguliers, lorsque le filtre ne peut plus assurer ses fonctions en raison d'un trop plein de débris (feuilles, microparticules, etc.) et nécessite d'être nettoyé. Dans les modèles récents, l'unité extérieure de commande et d'alimentation du robot émet un signal lumineux lorsque cette opération de nettoyage du filtre doit être réalisée.

L'action de nettoyage du filtre par l'utilisateur impose à ce dernier de sortir le robot de la piscine pour extraire le filtre logé au sein de son corps, puis à vider le filtre et enfin à le laver à grande eau, par exemple au moyen d'un tuyau d'arrosage. Ces opérations sont potentiellement salissantes pour l'utilisateur dans la mesure où le risque de contact avec les débris et boues de filtration est non négligeable. Ces opérations de nettoyage constituent donc pour l'utilisateur une source de désagréments.

En outre, les performances de filtration de l'appareil dépendent aussi de la capacité du circuit hydraulique et de la géométrie des composants internes à générer des mouvements tourbillonnaires de liquide au sein du dispositif de filtrage. Dans les modèles actuels d'appareil de nettoyage, la configuration et la position du dispositif de filtration, au regard de l'ensemble du circuit hydraulique, ne permet pas d'optimiser l'apparition de tels mouvements tourbillonnaires. En effet, lorsque qu'il pénètre au sein du dispositif de filtrage, le flux de liquide voit son mouvement stoppé par différents obstacles physiques telles que des parois droites, empêchant ainsi le liquide de poursuivre naturellement son cours et de créer des mouvements tourbillonnaires.

Par ailleurs, dans les appareils de nettoyage actuels, l'agencement du dispositif de filtrage au regard du circuit hydraulique impose d'acheminer le liquide soit par le côté ou le dessus dudit dispositif de filtrage. En conséquence, lorsqu'il est en fonctionnement, l'appareil de nettoyage embarque une quantité d'eau très nettement supérieure à celle effectivement contenue dans le dispositif de filtrage. Cet excès de masse liquide a un effet direct sur le poids du robot de nettoyage rendant son extraction de la piscine difficile.

### EXPOSÉ DE L'INVENTION

La présente invention a pour objectif de remédier à tout ou partie des inconvénients de l'art antérieur, notamment ceux exposés ci-avant, en proposant une solution qui permette d'avoir un appareil de nettoyage de piscine comprenant un corps et un dispositif de filtration agencé à l'intérieur dudit corps, ledit dispositif de filtration étant conformé de sorte à favoriser la création de mouvements tourbillonnaires, à être facilement nettoyable par un utilisateur, ainsi qu'agencé pour que le poids d'eau total embarqué dans ledit appareil est optimisé de sorte à en faciliter l'extraction de la piscine.

A cet effet, l'invention concerne un appareil de nettoyage d'une surface immergée dans un liquide, notamment un robot de nettoyage de piscine, comportant un corps, ledit corps comportant des parois inférieure, supérieure et latérales configurées de sorte que :
- ladite paroi inférieure est destinée à être positionnée en regard de la surface immergée sur laquelle se déplace l'appareil,
- ladite paroi supérieure est opposée à ladite paroi inférieure,
- lesdites parois latérales relient lesdites parois inférieure et supérieure,
des moyens de déplacement du corps sur ladite surface immergée, une chambre centrale, située à l'intérieur du corps, et comportant un panier de filtration, ledit panier de filtration comportant une paroi filtrante, ainsi qu'une ouverture permettant d'extraire ledit panier de filtration du corps. En outre, ladite ouverture est agencée sur une paroi latérale du corps.

Ainsi, les configurations respectives de la chambre centrale et de son panier de filtration à l'intérieur du corps du robot de piscine permettent avantageusement d'optimiser le volume d'eau (ou de manière équivalente le poids d'eau) embarqué par ledit robot. En effet, toute l'eau filtrée par le robot transite à l'intérieur par ladite chambre centrale, c'est-à-dire à l'intérieur dudit robot.

En outre, l'ouverture permettant l'accès au panier de filtration étant agencée sur une paroi latérale du robot, cela en facilite d'une part l'extraction, afin notamment de procéder à son nettoyage. D'autre part cela permet de concevoir avantageusement le robot avec un circuit hydraulique de sorte que l'eau à filtrer pénètre au sein du panier de filtration selon une direction adaptée à maintenir des mouvements tourbillonnaires (encore dits « cycloniques ») à l'intérieur dudit panier de filtration, lesdits mouvements tourbillonnaires assurant un décolmatage continu de la paroi filtrante du panier.

Dans des modes particuliers de réalisation, l'appareil de nettoyage comporte l'une ou plusieurs des caractéristiques suivantes, prises isolément ou selon toutes les combinaisons techniquement possibles.

Dans un mode particulier de réalisation, lesdites parois latérales comportent des paroi latérale droite et gauche positionnées respectivement sur la droite et la gauche de l'appareil lorsque ledit appareil se déplace vers l'avant, ladite ouverture étant de forme cylindrique et agencée sur ladite paroi latérale droite ou gauche.

La forme cylindrique de ladite ouverture permet de concevoir une chambre de filtration elle-même de forme sensiblement cylindrique de sorte que le panier de filtration en épouse la forme et occupe quasiment tout le volume interne de ladite chambre de filtration. Ainsi, le volume d'eau compris à l'intérieur du corps du robot est très majoritairement localisé à l'intérieur de la chambre de filtration.

En outre, le fait que l'ouverture, la chambre de filtration et le panier de filtration soient chacun de forme cylindrique permet avantageusement de concevoir une arrivée d'eau au sein du panier de filtration de sorte que les mouvements de l'eau lors de cette arrivée soient tangentiels à la paroi cylindrique dudit panier. De cette manière, l'eau pénètre dans le panier en suivant la courbure de sa paroi, favorisant ainsi l'apparition et le maintien de mouvements tourbillonnaires de l'eau au sein du panier de filtration.

Par ailleurs, la forme sensiblement cylindrique du panier de filtration permet avantageusement que l'eau qui y pénètre y soit filtrée sur la surface de sa paroi filtrante, ladite paroi filtrante faisant ici référence à une paroi périphérique.

Dans un mode particulier de réalisation, le panier de filtration comporte un couvercle monté hermétiquement sur ledit panier de filtration.

Le montage hermétique du couvercle sur le panier de filtration permet avantageusement que l'eau contenue dans ledit panier, lorsque le robot est en fonctionnement dans la piscine, ne puisse s'échapper par ladite ouverture agencée sur une paroi latérale dudit robot.

Dans un mode particulier de réalisation, le couvercle est amovible dudit panier de filtration.

Dans un mode particulier de réalisation, le couvercle comporte des moyens de préhension adaptés à permettre l'extraction du panier de filtration du corps.

De cette manière, la saisie desdits moyens de préhension du couvercle facilite l'extraction du panier de filtration de l'intérieur de la chambre de filtration, donc du robot.

Dans un mode particulier de réalisation, le couvercle comporte des moyens de verrouillage avec le corps adaptés à empêcher l'extraction non volontaire du panier de filtration.

Dans un mode particulier de réalisation, la paroi filtrante du panier de filtration (151) comporte une face latérale filtrante (153) agencée en regard du couvercle (17).

Une telle face latérale filtrante augmente avantageusement la surface filtrante totale du panier de filtration, de sorte que l'eau pénétrant à l'intérieur du panier est filtrée non seulement au travers de sa surface périphérique mais également au travers de ladite surface latérale filtrante.

Dans un mode particulier de réalisation, le panier de filtration (151) comporte des moyens de préhension (23) agencés sur la face latérale filtrante (153).

Une telle configuration du panier de filtration permet avantageusement d'améliorer la saisie et les manipulations du panier de filtration lors de son extraction et de son nettoyage. En effet, couplée aux moyens de préhension du couvercle, les moyens de préhension de la surface filtrante améliorent la saisie du panier de sorte qu'il est possible d'éviter tout contact avec la paroi filtrante dudit panier lors d'opérations de nettoyage effectuées en dehors de la piscine.

Dans un mode particulier de réalisation, les moyens de déplacement du corps (11) comprennent des organes d'entraînement et de guidage (12) du corps (11).

### PRÉSENTATION DES FIGURES

Les caractéristiques et avantages de l'invention seront mieux appréciés grâce à la description qui suit, description qui expose les caractéristiques de l'invention au travers de modes de réalisation préférés, qui n'en sont nullement limitatifs.

La description s'appuie sur les figures annexées qui représentent :
- Figure 1 : une vue en ¾ avant d'un exemple de réalisation d'un robot de nettoyage de piscine.
- Figure 2 : une vue en ¾ arrière d'un exemple de réalisation d'un robot de nettoyage de piscine.
- Figure 3 : une vue de côté d'un exemple de réalisation d'un panier de filtration adapté au robot de nettoyage des figures 1 et 2.

Dans ces figures, des références identiques d'une figure à une autre désignent des éléments identiques ou analogues. Pour des raisons de clarté, les éléments représentés ne sont pas à l'échelle, sauf mention contraire.

### DESCRIPTION DÉTAILLÉE D'UN MODE DE RÉALISATION DE L'INVENTION

La présente invention trouve sa place au sein d'un environnement technique de piscine, par exemple une piscine enterrée de type familial. Une telle dite piscine comporte notamment des parois constituant une surface immergée.

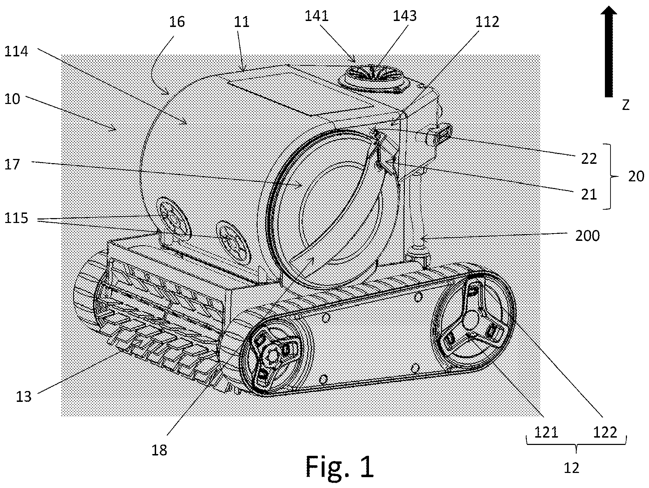

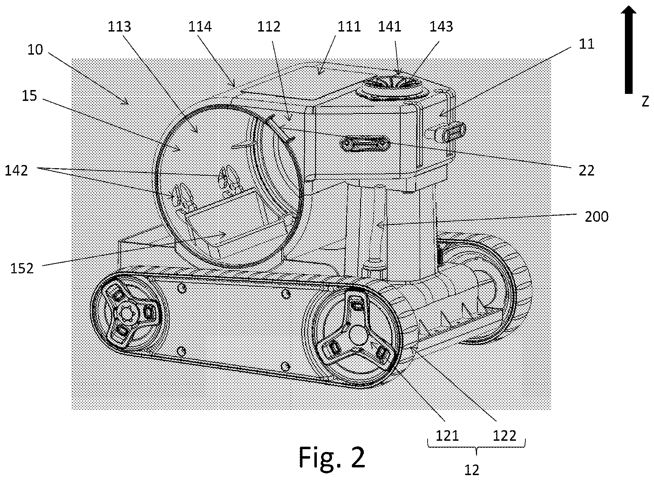

La figure 1 et la figure 2 représentent un exemple de réalisation d'un robot de nettoyage de piscine (10), et correspondent à des vues de ¾ respectivement avant et arrière dudit robot (10).

Le robot de nettoyage de piscine (10) est destiné à être alimenté en courant et piloté par un coffret d'alimentation et de commande (non représenté sur les figures 1 et 2). Ledit coffret d'alimentation et de commande est positionné en dehors de la piscine, et comporte une carte électronique d'alimentation adaptée à transformer un courant alternatif, provenant du secteur électrique, en courant continu nécessaire au fonctionnement du robot de nettoyage (10), ainsi qu'une carte électronique de commande adaptée à assurer la gestion automatisée des déplacements du robot de nettoyage (10) sur une surface immergée. Dans une variante de réalisation, le robot de nettoyage (10) embarque ladite carte électronique de commande, cette dernière étant agencée, par exemple, à proximité d'un moteur dudit robot de nettoyage (10).

Dans un mode particulier de réalisation, ladite carte d'alimentation du coffret d'alimentation et de commande est adaptée à transformer un courant alternatif de tension 230 volts (V), issu du secteur électrique, en courant continu inférieur à 30 V.

Le robot de nettoyage de piscine (10) est alimenté en énergie électrique au moyen d'un câble souple étanche (200) reliant le robot (10) au coffret d'alimentation et de commande.

Le robot de nettoyage de piscine (10) comprend un corps (11) ainsi que des moyens de déplacement du corps (11) sur la surface immergée, lesdits moyens de déplacement étant entraînés par un moteur.

En outre, lesdits moyens de déplacement du corps (11) comprennent des organes d'entraînement et de guidage (12) du corps (11) sur la surface immergée.

Dans l'exemple non limitatif illustré par les figures 1 et 2, les organes d'entraînement et de guidage (12) comportent quatre roues (121) et des chenilles (122) disposées de part et d'autre du corps (11). Plus particulièrement, lesdites roues (121) forment deux groupes de deux roues disposés latéralement par rapport au corps (11). Les axes de rotation desdites quatre roues (121) appartiennent à un unique plan, et chaque roue d'un desdits deux groupes étant positionnée en vis-à-vis d'une unique roue de l'autre desdits deux groupes de sorte qu'elles ont le même axe de rotation. En outre, le moteur entraînant lesdits organes d'entraînement et de guidage (12) est alimenté via une carte électronique embarquée comme décrit ci-dessus. Rien n'exclut, suivant d'autres exemples non détaillés ici, d'avoir un nombre de roues (121) différent ainsi que d'autres configurations pour les organes d'entraînement et de guidage (12).

On définit pour la suite de la description un axe Z relatif au robot de nettoyage (10). Ledit axe Z a pour direction une normale à la surface immergée sur laquelle reposent les organes d'entraînement et de guidage (12) lorsque le robot (10) est en fonctionnement, et est orienté de ladite surface immergée vers le corps (11), étant entendu que le sens de déplacement vers le haut correspond au sens d'orientation de l'axe Z. Ledit axe Z est représenté, à titre d'exemple nullement limitatif, dans les figures 1 et 2.

Dans la suite de la description, on adopte la convention qu'une normale à la paroi d'un objet quelconque est toujours orientée de l'intérieur vers l'extérieur dudit objet.

Par ailleurs, on restreint la définition du parallélisme de deux droites dans l'espace de dimension 3 au cas où il existe un unique plan contenant les deux dites droites, de sorte que les deux dites droites sont parallèles, au sens de la définition usuelle du parallélisme dans l'espace de dimension 2, dans le dit plan. Par induction, une telle restriction s'applique aussi à tout élément de dimension 1 assimilable à une demi-droite ou bien un segment.

Pour la suite de la description, on définit aussi deux axes X et Y de telle façon que :
- l'axe X est dit longitudinal, défini comme l'axe de déplacement du robot de nettoyage (10) sur la surface immergée, lorsque les organes d'entraînement et de guidage (12) sont commandés, par le coffret d'alimentation et de commande, à se déplacer dans le même sens, et orienté dans le sens de la marche avant, c'est-à-dire ici de la droite vers la gauche relativement aux figures 1 et 2,
- l'axe Y est dit transversal et défini de sorte que le repère tridimensionnel XYZ est orthogonal direct.

Par conséquent, l'axe Y est parallèle à l'axe de rotation des roues. On comprend dès lors que, du fait de sa dépendance à la position du robot de nettoyage (10) sur la surface immergée, ledit repère XYZ est un repère mobile.

Les notions d'avant, arrière, gauche, droite, haut, bas, supérieur, inférieur, etc. relatives au robot de nettoyage (10) sont définies par rapport au repère XYZ.

Enfin, une paroi d'un objet quelconque est vue comme un continuum de points matériels. Dès lors, on définit pour la suite de la description la notion de coordonnée minimale/maximale d'une paroi, selon l'une quelconque des directions X, Y ou bien Z, comme la coordonnée minimale/maximale, selon ladite l'une quelconque des directions X, Y ou bien Z, des dits points matériels définissant ladite paroi.

Le corps (11) du robot de nettoyage (10) comporte des parois inférieure, supérieure (111) et latérales configurées de sorte que :
- ladite paroi inférieure est destinée à être positionnée en regard de la surface immergée sur laquelle se déplace ledit robot (10),
- ladite paroi supérieure est opposée à ladite paroi inférieure,
- lesdites parois latérales relient lesdites parois inférieure et supérieure.

Une des parois latérales du corps (11) est dite « paroi avant » (114). Ladite paroi avant (114) est configurée de sorte qu'aucune de ses normales ne soit parallèle à l'axe Y, et telle que sa coordonnée minimale selon la direction X est supérieure à la coordonnée maximale selon la direction X des parois latérales autres que ladite paroi avant (114).

En outre, une desdites parois latérales du robot (10) comporte une ouverture (113) adaptée à permettre l'extraction d'un panier de filtration (151) du corps (11). Ladite ouverture (113) comprend un bord périphérique délimitant sa surface, ledit bord étant une courbe fermée entièrement comprise dans ladite paroi latérale.

Ledit panier de filtration (151) sera décrit plus en détails ci-après.

Dans l'exemple non limitatif illustré par les figures 1 et 2, le corps (11) présente une forme globalement parallélépipédique de telle sorte que les parois inférieure et supérieure sont orthogonales à l'axe Z. L'ensemble formé des parois latérales comprend une unique paroi latérale gauche (112) orthogonale à l'axe Y, et positionnée sur la gauche du robot (10) lorsque ledit robot (10) se déplace vers l'avant. En outre, l'ouverture (113) est agencée sur ladite paroi latérale (112), en en faisant partie intégrante, et est de forme circulaire. Le corps (11) comprend aussi une paroi avant (114) de forme arrondie et configurée de sorte que tout vecteur normal de ladite paroi avant (114) est contenu dans un plan orthogonal à l'axe Y. Rien n'exclut, suivant d'autres exemples non détaillés, d'avoir d'autres formes pour l'ouverture (113), comme par exemple triangulaire, ainsi que pour la paroi avant (114). De plus, rien n'exclut non plus que l'ouverture (113) depuis laquelle le panier de filtration (151) est extractible soit agencée sur une paroi latérale positionnée sur la droite du robot de nettoyage (10) lorsque ce dernier se déplace vers l'avant.

Le corps (11) du robot de nettoyage de piscine (10) comprend une brosse de nettoyage (13) adaptée à nettoyer la surface immergée sur laquelle se déplace ledit robot (10). Par « nettoyer la surface immergée », on entend ici transmettre un mouvement aux débris rencontrés par le robot de nettoyage (10) lors de ses déplacements sur ladite surface immergée. Ledit mouvement s'effectue dans une direction opposée à celle de l'avancement du robot (10), de ladite surface immergée vers le dessous du robot de nettoyage (10), c'est-à-dire en direction de la paroi inférieure dudit robot (10) par où les débris sont ensuite aspirés.

Dans l'exemple non limitatif illustré par les figures 1 et 2, l'enveloppe convexe de la brosse de nettoyage est de forme cylindrique, d'axe de rotation confondu avec celui des roues avant du robot (10), et de largeur égale à la distance, selon l'axe Y, entre les roues avant du robot (10). La brosse de nettoyage (13) comprend un tube central de forme cylindrique, ainsi que des balais disposés radialement et uniformément tout du long de la surface du tube. Les balais sont souples, de forme globalement parallélépipédique, et adaptés à frotter la surface immergée de sorte que les débris soient entraînés vers la paroi inférieure du corps (11). Rien n'exclut, suivant d'autres exemples non détaillés, d'avoir d'autres géométries ainsi que d'autres positionnements, par rapport au corps (11) du robot de nettoyage (10), pour la brosse de nettoyage (13) ainsi que les balais.

Le robot de nettoyage de piscine (10) comporte un dispositif de filtration adapté à filtrer les débris entrant dans le corps (11) par le dessous dudit robot (10). A cet effet, ledit dispositif de filtration comporte un circuit hydraulique comportant une pluralité d'entrées (non illustrées sur les figures 1 et 2) et de sorties de liquide, et est adapté à permettre la circulation du liquide depuis au moins une desdites entrées de liquide vers au moins une desdites sorties de liquide.

Plus particulièrement, lesdites entrées de liquide sont positionnées en amont du circuit hydraulique et traversent de part en part la paroi inférieure du corps (11). En d'autres termes, les débris, non encore filtrés, pénètrent au sein du robot (10) en passant à travers lesdites entrées de liquide.

Lesdites sorties de liquides, quant à elles, sont de différents types. Tout d'abord, une desdites sorties de liquide est une ouverture supérieure (141) positionnée en aval du circuit hydraulique et traversant de part en part la paroi supérieure (111). Ladite ouverture supérieure (141) est adaptée à évacuer, à l'extérieur du robot de nettoyage (10) en fonctionnement et selon une direction sensiblement parallèle l'axe Z, le liquide déchargé de ses débris du fait de sa circulation au sein du dispositif de filtration.

Dans un mode préférentiel de réalisation, illustré par les figures 1 et 2, mais nullement limitatif, l'ouverture (141), de forme circulaire, est positionnée sur la paroi supérieure (111), au niveau de l'arrière du robot (10). En outre, des ailettes (143) sont disposées en travers de ladite ouverture (141) tout du long de sa circonférence. Une telle configuration est avantageuse dans la mesure où les ailettes (143) permettent de redresser le flux hydraulique selon un mouvement purement vertical suivant l'axe Z. Ainsi, lorsque le robot de nettoyage (10) est en fonctionnement, l'eau propre, c'est-à-dire ayant été filtrée au sein du dispositif de filtration, est aspirée au moyen d'un moteur décrit ci-après vers ladite ouverture (141), les ailettes (143) ayant pour rôle de redresser le flux de cette eau propre selon l'axe Z. De manière secondaire, lesdites ailettes (143) empêchent aussi, et d'une part l'entrée d'objets par l'ouverture (141) de la paroi supérieure (111), et d'autre part, l'introduction des mains d'un utilisateur au sein du circuit hydraulique, prévenant ainsi tout risque d'endommagement du dispositif de filtration ou bien encore de dommage physique pour ledit utilisateur.

Par ailleurs, lesdites sorties de liquide sont aussi des ouvertures avant (142) traversant de part en part la paroi avant du robot (10), et adaptées à évacuer l'eau propre contenue dans le corps (11), lorsque le robot (10) n'est plus en fonctionnement et est extrait de la piscine par un utilisateur.

Dans l'exemple non limitatif illustré par les figures 1 et 2, le circuit hydraulique comporte deux ouvertures avant (142) circulaires, chacune desdites ouvertures avant (142) présentant une surface partitionnée uniformément en quatre ouvertures plus petites. Rien n'exclut, suivant d'autres exemples non détaillés, d'avoir d'autres formes et d'autres configurations pour les ouvertures avant (142).

Dans la suite de la description, sauf mention contraire, on se place de manière non limitative dans le cas où le robot de nettoyage de piscine (10) comporte, lorsqu'il est en fonctionnement, une unique entrée de liquide au niveau de sa paroi inférieure ainsi qu'une unique sortie de liquide (141) au niveau de sa paroi supérieure (111).

Le corps (11) du robot de nettoyage de piscine (10) comprend aussi un moteur et une hélice, l'ensemble formé par ledit moteur et ladite hélice constituant une pompe adaptée à aspirer, ainsi qu'à se faire mouvoir, le liquide au sein du circuit hydraulique du dispositif de filtration. Ladite pompe est positionnée en aval du circuit de filtration, entre le panier de filtration (151) et la sortie de liquide (141), en partie haute du corps (11) du robot (10). Plus particulièrement, ledit moteur est adapté à entrainer l'hélice en rotation de sorte que, d'une part, les débris dirigés vers le dessous du robot de nettoyage (10), grâce à la brosse de nettoyage (13), sont aspirés à travers l'entrée de liquide au sein du corps (11), et d'autre part, le liquide filtré, c'est-à-dire débarrassé de ses débris, est expulsé à l'extérieur du robot (10) à travers l'ouverture (141).

Le corps (11) comprend également des clapets (115) positionnés, depuis l'extérieur du robot (10), sur la paroi avant (114) dudit corps (11), en position basse de ladite paroi (114). En outre, chacun desdits clapets (115) est situé en regard d'une unique ouverture avant (142), de sorte que lorsque les clapets (115) sont plaqués contre la paroi avant (114), ils recouvrent entièrement lesdites ouvertures (142), empêchant ainsi la sortie du liquide filtré contenu dans le corps (11).

Plus spécifiquement, l'hélice de la pompe est adaptée à créer, lorsqu'elle est en rotation, un flux dépressionnaire au niveau de la paroi avant (114), de sorte que les clapets (115) sont aspirés et plaqués vers ladite paroi avant (114), venant ainsi obstruer les ouvertures avant (142) auxquelles ils font face. De cette manière, lorsque le robot (10) est en fonctionnement, le liquide filtré, donc propre, qui est contenu dans le corps (11) ne peut s'échapper par lesdites ouvertures avant (142), et a pour unique voie de sortie l'ouverture (141). On comprend ainsi que les clapets (115) sont positionnés de sorte à être en contact uniquement avec du liquide filtré.

Alternativement, lorsque le robot ne fonctionne pas, l'hélice de la pompe est à l'arrêt, de sorte que les clapets (115) sont libres de leur mouvement et non pas plaqués contre la paroi avant (114) comme cela est le cas lorsque le robot (10) est en fonctionnement. De cette manière, lorsqu'un utilisateur souhaite extraire le robot (10) de la piscine en le tirant préférentiellement par l'arrière (ce qui a pour effet de faire pencher l'avant dudit robot (10) vers le fond de la piscine), grâce à des moyens de préhension adaptés et solidaires d'une des parois dudit robot (10), le liquide contenu dans le corps (11), au niveau de la paroi avant (114), exerce une pression, du fait de la gravité, sur les clapets (115) qui se décollent de ladite paroi (114), laissant ainsi le liquide filtré contenu de manière résiduelle dans le robot (10) s'échapper au travers des ouvertures avant (142). Une telle configuration permet de diminuer la masse de liquide au sein du robot (10) de sorte que son extraction de la piscine en est facilitée.

Dans l'exemple non limitatif illustré par les figures 1 et 2, les clapets (115) sont au nombre de deux et réalisés en caoutchouc. Chaque clapet (115) est positionné en regard d'une ouverture (142), et comporte un disque, ledit disque étant l'embase d'une tige positionnée selon l'axe de rotation dudit disque. Chaque dite tige est solidaire de chaque dit disque, et traverse radialement la paroi avant (114) au niveau d'un trou percé à équidistance des quatre petites ouvertures partitionnant l'ouverture avant (142), à laquelle chaque clapet (115) fait face. En outre, la tige de chaque clapet (115) comprend au niveau de son extrémité située à l'intérieur du corps (11) un épaulement adapté à servir de surface d'appui de ladite extrémité contre la paroi avant (114), ainsi qu'à empêcher le retrait dudit clapet (115) dudit trou percé. De cette manière, chaque clapet (115) est adapté à se déplacer radialement à travers la paroi avant (114), selon une amplitude correspondant à la distance séparant son embase de l'épaulement de sa tige, diminuée de l'épaisseur de la paroi avant (114). Rien n'exclut, suivant d'autres exemples non détaillés, d'avoir d'autres géométries pour les clapets (115).

Le dispositif de filtration du robot de nettoyage de piscine (10) comprend une chambre centrale (15) disposée au sein du corps (11). Ladite chambre centrale (15) traverse de part en part le corps (11) du robot de nettoyage (10), et comporte une paroi transverse s'appuyant sur deux faces latérales. Chaque face latérale fait partie intégrante d'une paroi latérale du corps (11), lesdites parois latérales étant distinctes, non contigües et différentes de la paroi avant (114). Une desdites faces latérales est virtuelle, et confondue avec l'ouverture (113). L'autre face latérale, distincte de l'ouverture (113), est recouverte par une surface fermée (16) positionnée sur la paroi latérale gauche (112), c'est-à-dire comprise dans le corps (11) du robot (10), et configurée de sorte que le liquide, dans lequel le robot (10) est immergé, ne puisse pénétrer au sein du corps (11) par cette dite surface fermée (16).

Dans l'exemple non limitatif illustré par les figures 1 et 2, la chambre de centrale (15) est de forme sensiblement cylindrique, d'axe de révolution parallèle à l'axe Y. La paroi transverse de la chambre de centrale (15) a pour base deux disques virtuels, disposés en vis-à-vis, et faisant partie intégrante de deux parois latérales orthogonales à l'axe Y. Un des deux dits disques est l'embase d'un hublot, ayant la forme d'une calotte sphérique et de forme bombée tournée vers l'extérieur du corps (11). Ledit hublot est ladite surface fermée (16) et est attaché par soudure, collage, ou tout autre moyen, au corps (11). En outre, ledit hublot est réalisé en matière plastique transparente de type PMMA (acronyme de l'expression anglaise « Polymethyl Methacrylate »), de sorte qu'un utilisateur du robot de nettoyage de piscine (10) puisse acquérir visuellement, en regardant au sein du corps (11) selon un axe parallèle à l'axe Y, une information partielle quant à l'état d'encombrement du dispositif de filtration.

La chambre centrale (15) est interposée, sur le circuit hydraulique, entre l'entrée de liquide et la sortie de liquide (141). La chambre de centrale (15) est alimentée en liquide au moyen d'au moins un canal amont reliant l'entrée de liquide à ladite chambre centrale (15). Plus particulièrement, ledit canal amont débouche dans la chambre centrale (15) à travers une ouverture d'alimentation (152), ladite ouverture d'alimentation (152) étant configurée de sorte que le liquide qui l'a traverse est directement acheminé au sein du panier de filtration (151). On comprend ainsi que seul du liquide non filtré transite au travers de ladite ouverture d'alimentation, depuis le canal amont vers le panier de filtration (151), l'agencement de ladite ouverture d'alimentation (152) par rapport au panier de filtration (151) étant décrit plus en détail ci-après.

Dans un mode particulier de réalisation, le circuit hydraulique du dispositif de filtration comporte plusieurs entrées de liquide, ainsi qu'une pluralité de canaux amonts et d'ouvertures d'alimentation adaptés à alimenter en liquide la chambre centrale (15).

Dans la suite de la description, on se place de manière non limitative dans le cas où ladite chambre centrale (15) est alimentée par un unique canal amont.

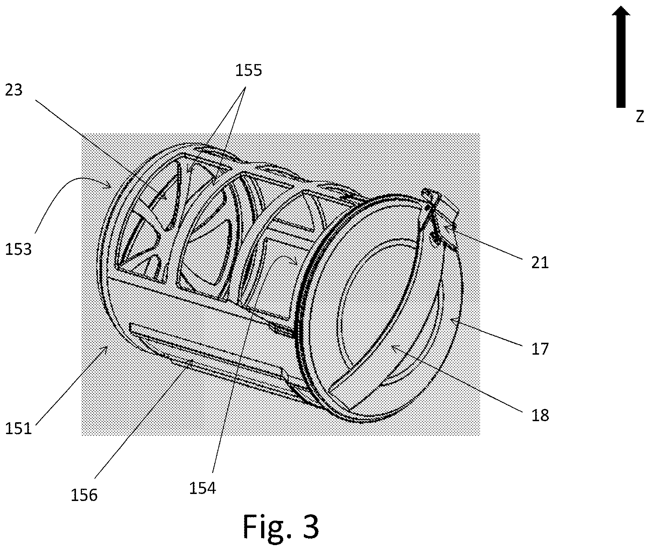

La figure 3 représente un exemple de réalisation d'un panier de filtration (151), ledit exemple de réalisation étant adapté au robot de nettoyage (10) des figures 1 et 2.

La chambre centrale (15) comprend ledit panier de filtration (151), ce dernier étant adapté à filtrer les débris aspirés au sein du circuit de filtration par l'entrée de liquide, et acheminés successivement via le canal amont et l'ouverture d'alimentation (152) au sein de ladite chambre centrale (15).

A cet effet, la chambre centrale (15) est configurée de sorte que son volume interne est supérieur à celui du panier de filtration (151), ce dernier étant sensiblement centré au sein de ladite chambre centrale (15). De cette manière subsiste un espace résiduel entre le panier de filtration (151) et la chambre centrale (15), ledit espace résiduel étant destiné à contenir uniquement du liquide ayant transité dans un premier temps au sein dudit panier de filtration (151), donc du liquide propre. Le liquide propre contenu dans ledit espace résiduel est destiné à être évacué par l'ouverture supérieure (141) et les ouvertures avant (142) lorsque le robot (10) est respectivement en fonctionnement et à l'arrêt.

Le panier de filtration (151) occupe la plus grande partie du volume interne de la chambre centrale (15), et en épouse globalement la forme. Ainsi, ledit panier de filtration traverse de part en part le corps (11) du robot de nettoyage (10), et comporte une paroi transverse s'appuyant sur deux faces latérales distinctes et non contigües. En particulier, une des deux dites faces latérales, nommée « face latérale filtrante » (153), est située du même côté du corps (11) que la surface fermée (16) du corps (11) du robot (10), et est en outre directement en regard de ladite surface fermée (16). La seconde face latérale (154) est virtuelle, contenue dans l'ouverture (113) lorsque le panier de filtration (151) est inséré dans la chambre centrale (15), et située en vis-à-vis de ladite face latérale filtrante (153). Ladite face latérale (154) comprend un bord périphérique délimitant sa surface.

Ledit panier de filtration (151) comporte une paroi filtrante, dite aussi « filtre » dans la suite de la description, ladite paroi filtrante étant la réunion de ladite paroi transverse dudit panier de filtration (151) et de ladite face latérale filtrante (153). Ladite paroi filtrante comporte une surface à maille fine formant le filtre à proprement dit, et est attachée par soudure, collage ou tout autre moyen, sur une armature rigide ajourée (155).

La taille de la maille de la paroi filtrante est naturellement adaptée à la taille des particules que le robot de nettoyage (10) doit retenir lors de son déplacement sur la surface immergée.

Par ailleurs, le panier de filtration (151) comprend un clapet anti-retour (156) intégré à la paroi transverse dudit panier de filtration (151), de sorte que, lorsque ledit panier de filtration (151) est inséré dans la chambre centrale (15), le dit clapet anti-retour (156) est positionné en regard de l'ouverture d'alimentation (152). Ledit clapet anti-retour (156) est adapté à permettre l'entrée du liquide, ayant transité successivement dans le canal amont ainsi que par l'ouverture (152) de la chambre centrale (15), au sein du panier de filtration (151), tout en empêchant la sortie dudit liquide dudit panier de filtration (151).

Le panier de filtration (151) comporte aussi un couvercle amovible (17) monté hermétiquement sur ledit panier de filtration (151) afin d'éviter des fuites de liquide chargé de débris. A cet effet, ledit couvercle (17) comporte un bord périphérique adapté à venir coopérer avec le bord périphérique de la face latérale (154).

Dans une variante de réalisation, le couvercle (17) comprend un joint périphérique (non illustré sur les figures) venant en appui sur le bord de la face latérale (154).

Dans l'exemple non limitatif illustré par la figure 3, le panier de filtration (151) est de forme cylindrique, d'axe de révolution parallèle à l'axe Y et confondu avec l'axe de révolution de la chambre centrale (15). La paroi transverse du panier de filtration (151) a pour base deux disques, disposés en vis-à-vis, et faisant partie intégrante de deux parois latérales orthogonales à l'axe Y. Un des deux dits disques est ladite face latérale filtrante (153) située directement en regard du hublot du corps (11). Le second disque est la face latérale (154) virtuelle. Par ailleurs, ladite face latérale (154) est l'embase d'un hublot, ayant la forme d'une calotte sphérique et de forme bombée tournée vers l'extérieur du corps (11), ledit hublot étant le couvercle (17) du panier de filtration (151). Ledit couvercle (17) est réalisé en matière solide transparente (verre, plastique, etc.), de sorte qu'un utilisateur du robot de nettoyage de piscine (10) puisse acquérir visuellement, en regardant au sein du corps (11) selon un axe parallèle à l'axe Y, une information partielle quant à l'état d'encombrement du dispositif de filtration.

Le couvercle (17) du panier de filtration est amovible, permettant ainsi à un utilisateur d'accéder au contenu du panier de filtration (151), pour nettoyer le filtre lorsque cela se révèle nécessaire. A cet effet, le couvercle (17) comprend des moyens de préhension (18) permettant de manipuler ledit couvercle (17) lorsqu'il ne coopère pas avec le panier de filtration (151), ainsi que des moyens de maintien en position fixe avec le panier de filtration (151).

Dans l'exemple non limitatif illustré par les figures 2 et 3, lesdits moyens de préhension (18) du couvercle (17) sont une poignée fixe, et lesdits moyens de maintien du couvercle (17) avec le panier de filtration (151) comprennent une saillie agencée sur une partie restreinte du bord périphérique dudit couvercle (17). Ladite saillie est adaptée à s'encastrer dans un sillon creusé sur la paroi transverse du panier de filtration (151), au niveau de la face latérale (154). De cette manière, lorsque ladite saillie est encastrée dans ledit sillon, le couvercle (17) est maintenu solidaire du panier de filtration (151). Par ailleurs, le couvercle (17) est amovible dudit panier de filtration (151) au moyen d'un mouvement de rotation permettant de faire sortir ladite saillie dudit sillon. Ledit mouvement de rotation est réalisé par un utilisateur, selon l'axe de rotation du panier de filtration (151), au moyen de ladite poignée fixe (18), et son amplitude n'excède pas un quart de la circonférence totale du bord périphérique de la face latérale (154).

Par ailleurs, dans l'exemple non limitatif illustré par les figures 2 et 3, la poignée (18) du couvercle (17) est une bande en plastique transparente ayant deux points d'attache sur ledit couvercle (17), et configurée de sorte que l'écart entre ladite poignée (18) et le couvercle (17) permette à un utilisateur de saisir ladite poignée (18) à pleine main. En outre, les deux dits points d'attache sont diamétralement opposés relativement à la face latérale (154) servant d'embase au couvercle (17). Rien n'exclut, suivant d'autres exemples non détaillés, d'avoir d'autres formes, d'autres configurations, ainsi que d'autres matériaux de construction pour la poignée fixe (18).

Le panier de filtration (151) est extractible, c'est-à-dire qu'il peut être extrait de, et introduit dans, la chambre centrale (15), le couvercle (17) venant former une continuité avec la paroi latérale du corps (11) comprenant l'ouverture (113). L'extraction, ou l'introduction, du panier de filtration (151), lorsqu'il est maintenu solidaire avec le couvercle (17), se fait grâce aux moyens de préhension (18), selon un mouvement de translation. Ledit mouvement de translation suit sensiblement une ligne quelconque joignant deux points appartenant respectivement aux faces (153) et (154).

Dans l'exemple non limitatif illustré par la figure 1, le panier de filtration (151) est extractible de la chambre centrale (15) selon son axe de révolution, c'est-à-dire selon un mouvement de translation parallèle à l'axe Y. Ledit mouvement de translation est, par exemple, initié par un utilisateur tirant sur le panier de filtration (151) au moyen de la poignée (18) du couvercle (17).

En outre, le couvercle (17) comporte des moyens de verrouillage (20) avec le corps (11) du robot de nettoyage de piscine (10). Lesdits moyens de verrouillage (20) sont reliés aux moyens de préhension (18) par des moyens de rappel, et sont adaptés, lorsque le couvercle (17) est maintenu solidaire avec le panier de filtration (151) grâce aux moyens de maintien, à empêcher l'extraction non volontaire dudit panier de filtration (151).

Dans l'exemple non limitatif illustré par les figures 1, 2 et 3, lesdits moyens de verrouillage (20) comportent un verrou (21) positionné à l'une des extrémités de la poignée (18) du couvercle (17), ainsi qu'une encoche (22), moulée dans la paroi latérale (112) du corps (11). En particulier, ledit verrou (21) comporte une extrémité distale recourbée, et adaptée à s'insérer dans ladite encoche (22), de sorte à empêcher l'extraction du panier de filtration (151) en dehors de la chambre centrale (15). En outre, lesdits moyens de rappel reliant ledit verrou (21) à la poignée (18) sont un ressort de torsion. Ledit ressort de torsion est configuré de sorte qu'une pression sur l'extrémité proximale dudit verrou (21) permet de faire pivoter ledit verrou (21) autour de l'axe de rotation dudit ressort. De cette manière, un utilisateur peut actionner manuellement le verrou (21) afin de faire sortir son extrémité distale de ladite encoche (22), et ainsi déverrouiller et extraire le panier de filtration (151) du corps (11).

Dans un mode particulier de réalisation, l'encoche (22) n'est pas moulée dans la surface externe du corps (11), et consiste en une pièce attachée par soudure, collage, ou tout autre moyen, à la paroi latérale comprenant l'ouverture (113).

Ledit panier de filtration (151) comprend également des moyens de préhension (23) positionnés sur la face latérale filtrante (153), à l'extérieur du panier de filtration (151), et permettant la manipulation dudit panier de filtration (151) lorsqu'il est extrait de la chambre centrale (15).

Dans l'exemple non limitatif illustré par la figure 3, lesdits moyens de préhension (23) sont une poignée fixe disposée sur la partie de l'armature rigide ajourée (155) de la face latérale filtrante (153) du panier de filtration (151). Ladite poignée (23) est comprend deux points d'attache sur ladite face latérale filtrante (153), et est configurée de sorte que l'écart entre ladite poignée (23) et ladite face latérale filtrante (153) permet à un utilisateur de saisir ladite poignée (23) à pleine main. En outre, les deux dits points d'attache sont diamétralement opposés relativement à la face latérale filtrante (153). Rien n'exclut, suivant d'autres exemples non détaillés, d'avoir d'autres formes ainsi que d'autres configurations pour la poignée fixe (23).

De manière plus générale, il est à noter que les modes de réalisation considérés ci-dessus ont été décrits à titre d'exemples non limitatifs, et que d'autres variantes sont par conséquent envisageables.

### AVANTAGES DE L'INVENTION

L'utilisation d'une chambre centrale (15) ainsi que d'un panier de filtration (151), tous deux de forme cylindrique (tel qu'illustré par les figures 1, 2 et 3), et configurés de sorte que ledit panier de filtration (151) est extractible depuis une face latéral du robot (10), est avantageuse en ce qui concerne l'optimisation de la filtration des débris. En effet, une telle configuration est adaptée à ce que la circulation du liquide, qui pénètre dans le panier de filtration (151) via le canal amont, selon un mouvement de bas en haut relativement au repère XYZ lié au robot (10), soit cyclonique tout au long du nettoyage de la piscine. En effet, les positions relatives de l'ouverture d'alimentation (152) et du clapet anti-retour (156) sont adaptées à ce que le liquide pénètre au sein du panier de filtration (151) dans une direction qui suit la forme du filtre. Une telle configuration est avantageuse car, du fait que le flux de liquide suive la forme arrondie du filtre, elle optimise la formation de mouvements tourbillonnaires au sein d'une région du panier de filtration (151), ladite région étant éloignée des bords dudit panier de filtration (151). De tels mouvements tourbillonnaires permettent, d'une part, de décolmater des débris qui peuvent se coller à la paroi filtrante du panier de filtration (151), et d'autre part, de maintenir les débris en suspension éloignés des parois filtrantes, de sorte que le filtre ne puisse s'obstruer.

En outre, le panier de filtration (151) est configuré de sorte qu'il occupe la plus grande partie du volume interne de la chambre centrale (15). Une telle configuration est avantageuse car elle permet de limiter la perte d'espace au sein même du robot (10), de sorte que le liquide non encore filtré est acheminé directement dans le panier de filtration (151) en suivant un chemin rectiligne, sans parcourir de distance sur les côtés de ladite chambre centrale (15). De cette manière, et d'une part, le flux de liquide subit moins de pertes de charges comparativement à ce qui peut être observé dans un robot traditionnel, et d'autre part le robot (10) embarque moins de liquide qu'un robot traditionnel. Ainsi le poids du robot (10) se trouve optimisé, ce qui permet de réduire la consommation d'énergie de l'appareil de nettoyage.

Par ailleurs, le fait que le panier de filtration (151) soit extractible depuis une face latérale du robot (10), et dispose des moyens de préhension (18) et (23), permet de le vider facilement, notamment sans devoir manipuler l'unité de nettoyage en entier. Plus précisément, les moyens de préhension (23) sont configurés de sorte que le panier de filtration (151) est manipulable sans devoir entrer en contact avec des boues de filtration, localisées au niveau de la surface filtrante. L'utilisateur peut ainsi, après avoir extrait le panier de filtration (151) du corps (11) à l'aide des moyens de préhension (18), retourner ledit panier de filtration (151) à l'aide des moyens de préhension (23), le vider, puis le laver à grande eau toujours sans entrer en contact avec les boues de filtration.

Par ailleurs, la forme cylindrique du panier de filtration (151) contribue aussi à permettre un nettoyage aisé de ce dernier. En effet, l'absence de recoin du volume interne du panier de filtration (151) implique l'absence de zones difficiles d'accès, et par conséquent difficiles à nettoyer.

## Revendications

1. Appareil (10) de nettoyage d'une surface immergée dans un liquide, notamment un robot de nettoyage de piscine, comportant un corps (11), ledit corps (11) comportant des parois inférieure, supérieure et latérales configurées de sorte que :
- ladite paroi inférieure est destinée à être positionnée en regard de la surface immergée sur laquelle se déplace l'appareil (10),
- ladite paroi supérieure est opposée à ladite paroi inférieure,
- lesdites parois latérales relient lesdites parois inférieure et supérieure,
des moyens de déplacement du corps (11) sur ladite surface immergée, une chambre centrale (15), située à l'intérieur du corps (11), et comportant un panier de filtration (151), ledit panier de filtration (151) comportant une paroi filtrante, ainsi qu'une ouverture (113) permettant d'extraire ledit panier de filtration (151) du corps (11), **caractérisé en ce que** ladite ouverture (113) est agencée sur une paroi latérale du corps (11).

2. Appareil (10) selon la revendication 1, **caractérisé en ce que** lesdites parois latérales comportent des paroi latérale droite et gauche positionnées respectivement sur la droite et la gauche de l'appareil (10) lorsque ledit appareil (10) se déplace vers l'avant, ladite ouverture (113) étant de forme cylindrique et agencée sur ladite paroi latérale droite ou gauche.

3. Appareil (10) selon l'une quelconque des revendications 1 et 2, **caractérisé en ce que** le panier de filtration (151) comporte un couvercle (17) monté hermétiquement sur ledit panier de filtration (151).

4. Appareil (10) selon la revendication 3, **caractérisé en ce que** le couvercle (17) est amovible dudit panier de filtration (151).

5. Appareil (10) selon l'une quelconque des revendications 3 et 4, **caractérisé en ce que** le couvercle (17) comporte des moyens de préhension (18) adaptés à permettre l'extraction du panier de filtration (151) du corps (11).

6. Appareil selon l'une quelconque des revendications 3 à 5, **caractérisé en ce que** le couvercle (17) comporte des moyens de verrouillage (20) avec le corps (11) adaptés à empêcher l'extraction non volontaire du panier de filtration (151).

7. Appareil (10) selon l'une quelconque des revendications 3 à 5, **caractérisé en ce que** la paroi filtrante du panier de filtration (151) comporte une face latérale filtrante (153) agencée en regard du couvercle (17).

8. Appareil (10) selon la revendication 7, **caractérisé en ce que** le panier de filtration (151) comporte des moyens de préhension (23) agencés sur la face latérale filtrante (153).

9. Appareil (10) selon quelconque des revendications précédentes, **caractérisé en ce que** les moyens de déplacement du corps (11) comprennent des organes d'entraînement et de guidage (12) du corps (11).

## Patentansprüche

1. Reinigungsgerät (10) einer in eine Flüssigkeit eingetauchten Oberfläche, insbesondere ein Poolreinigungsroboter, einen Körper (11) beinhaltend, wobei der Körper (11) untere, obere und seitliche Wände beinhaltet, derart konfiguriert, dass:
- die untere Wand dazu bestimmt ist, gegenüber der eingetauchten Oberfläche, auf der sich das Gerät (10) fortbewegt, positioniert zu werden,
- die obere Wand entgegengesetzt zu der unteren Wand ist,
- die seitlichen Wände die untere und obere Wand verbinden, Fortbewegungsmittel des Körpers (11) auf der eingetauchten Oberfläche, eine zentrale Kammer (15), die sich im Inneren des Körpers (11) befindet, und einen Filterkorb (151) beinhaltend, wobei der Filterkorb (151) eine Filterwand beinhaltet, sowie eine Öffnung (113), die es ermöglicht, den Filterkorb (151) aus dem Körper (11) zu extrahieren, **dadurch gekennzeichnet, dass** die Öffnung (113) auf einer seitlichen Wand des Körpers (11) angeordnet ist.

2. Gerät (10) nach Anspruch 1, **dadurch gekennzeichnet, dass** die seitlichen Wände eine rechte und linke seitliche Wand beinhalten, die jeweils rechts und links am Gerät (10) positioniert sind, wenn sich das Gerät (10) vorwärts fortbewegt, wobei die Öffnung (113) von zylindrischer Form ist, und auf der rechten oder linken seitlichen Wand angeordnet ist.

3. Gerät (10) nach einem der Ansprüche 1 und 2, **dadurch gekennzeichnet, dass** der Filterkorb (151) einen Deckel (17) beinhaltet, der hermetisch auf dem Filterkorb (151) montiert ist.

4. Gerät (10) nach Anspruch 3, **dadurch gekennzeichnet, dass** der Deckel (17) von dem Filterkorb (151) abnehmbar ist.

5. Gerät (10) nach einem der Ansprüche 3 und 4, **dadurch gekennzeichnet, dass** der Deckel (17) Greifmittel (18) beinhaltet, die ausgeführt sind, um die Extrahierung des Filterkorbs (151) aus dem Körper (11) zu erlauben.

6. Gerät nach einem der Ansprüche 3 bis 5, **dadurch gekennzeichnet, dass** der Deckel (17) Verriegelungsmittel (20) mit dem Körper (11) beinhaltet, die ausgeführt sind, um die nicht gewollte Extrahierung des Filterkorbs (151) zu verhindern.

7. Gerät (10) nach einem der Ansprüche 3 bis 5, **dadurch gekennzeichnet, dass** die Filterwand des Filterkorbs (151) eine seitliche Filterfläche (153) beinhaltet, die gegenüber dem Deckel (17) angeordnet ist.

8. Gerät (10) nach Anspruch 7, **dadurch gekennzeichnet, dass** der Filterkorb (151) Greifmittel (23) beinhaltet, die auf der seitlichen Filterfläche (153) angeordnet sind.

9. Gerät (10) nach einem der vorstehenden Ansprüche, **dadurch gekennzeichnet, dass** die Fortbewegungsmittel des Körpers (11) Antriebs- und Führungsorgane (12) des Körpers (11) umfassen.

## Claims

1. Apparatus (10) for cleaning a surface immersed in a liquid, notably a swimming pool cleaning robot, including a body (11), said body (11) including lower, upper and lateral walls configured so that:
- said lower wall is intended to be positioned facing the immersed surface over which the apparatus (10) moves,
- said upper wall is opposite said lower wall,
- said lateral walls connect said lower and upper walls,
means for moving the body (11) over said immersed surface, a central chamber (15), situated inside the body (11), and including a filter basket (151), said filter basket (151) including a filter wall, and an opening (113) enabling extraction of said filter basket (151) from the body (11), **characterized in that** said opening (113) is on a lateral wall of the body (11).

2. Apparatus (10) according to claim 1, **characterized in that** said lateral walls include right and left lateral walls respectively positioned on the right and the left of the apparatus (10) when said apparatus (10) moves forward, said opening (113) being of cylindrical shape and positioned on said right or left lateral wall.

3. Apparatus (10) according to claims 1 or 2, **characterized in that** the filter basket (151) includes a cover (17) hermetically mounted on said filter basket (151).

4. Apparatus (10) according to claim 3, **characterized in that** the cover (17) is removable from said filter basket (151).

5. Apparatus (10) according to claims 3 or 4, **characterized in that** the cover (17) includes holding means (18) adapted to enable extraction of the filter basket (151) from the body (11).

6. Apparatus according to any one of claims 3 to 5, **characterized in that** the cover (17) includes means (20) for locking it to the body (11) adapted to prevent involuntary extraction of the filter basket (151).

7. Apparatus (10) according to any one of claims 3 to 5, **characterized in that** the filter wall of the filter basket (151) includes a filter lateral face (153) facing the cover (17).

8. Apparatus (10) according to claim 7, **characterized in that** the filter basket (151) includes holding means (23) on the filter lateral face (153).

9. Apparatus (10) according to any one of the preceding claims, **characterized in that** the means for moving the body (11) comprise members (12) for driving and guiding the body (11).
